# FASCICULE DE BREVET EUROPEEN

(11) **EP 1 632 752 B1**
(45) Date de publication et mention de la délivrance du brevet: **15.10.2008**
(21) Numéro de dépôt: 05291828.1
(22) Date de dépôt: 02.09.2005
(51) Int. Cl.: G01D 5/14, G01P 3/487

(54) **Codeur de déplacement, dispositif comprenant un tel codeur et procédé de fabrication d'un tel codeur**
Weggeber, Vorrichtung mit derartigem Weggeber und Herstellungsverfahren von derartigem Weggeber
Displacement encoder, device including such encoder and manufacturing method of such encoder

(30) Priorité: 06.09.2004 FR 0409400
(43) Date de publication de la demande: 08.03.2006
(73) Titulaire: HUTCHINSON, 75008 Paris (FR)
(72) Inventeur: Fayaud, Patrick, 49000 Angers (FR); Guerbe, Laurent, 49220 Grez-Neuville (FR)
(74) Mandataire: Burbaud, Eric

(56) Documents cités:
- EP-A- 0 949 510
- US-A- 5 713 577
- US-A1- 2002 140 418

## Description

La présente invention se rapporte à un codeur de déplacement pour arbre mobile, et plus particulièrement, à un codeur comprenant un manchon destiné à être calé sur l'arbre et une zone codeuse présentant au moins un repère magnétique polarisé, qui comporte au moins un aimant disposé contre le manchon et recouvert.

Dans de nombreuses applications, notamment pour des arbres de roues, des arbres de sorties de boîtes de vitesse ou des vilebrequins de moteurs à combustion interne, on équipe les arbres de dispositifs de codage de déplacement angulaires ou linéaires pour connaître leur vitesse instantanée et/ou leur position et/ou leur sens de déplacement.

La fonction de codage peut être réalisée par un ou plusieurs repères magnétiques polarisés qui forment une zone codeuse dont le déplacement est détecté par un détecteur de champ magnétique disposé en regard de cette zone codeuse. Pour ce type de codeur, il est connu, notamment du document FR-A 2 777 060, de réaliser le ou les repères de la zone codeuse à l'aide d'une couche d'élastoferrite, c'est-à-dire un polymère de type élastomère contenant une forte proportion de particules magnétiques comme par exemple de la poudre de ferrite, qui est adhérisée lors de son moulage au manchon du codeur. Une telle solution est pratique à mettre en oeuvre du fait de la formation de la couche magnétique et des repères polarisés, ainsi que l'adhérisation de cette couche au manchon lors du processus de moulage.

Toutefois, le champ magnétique créé par l'élastoferrite n'atteint pas une intensité suffisante pour certaines applications, notamment lorsque l'entrefer entre la zone codeuse atteint une valeur trop importante du fait de la place disponible pour le capteur de champ magnétique
ou des variations de l'entrefer au cours du fonctionnement du dispositif. Pour augmenter à l'intensité du champ magnétique créé par un élastoferrite, il est connu d'augmenter la proportion de particules magnétiques. Mais les densités de particules magnétiques désormais atteintes rendent l'élastoferrite trop fragile et friable pour certaines applications.

D'autre part, on connaît du document US-A-2002/140418, un codeur de déplacement selon le préambule de la revendication 1. Toutefois, l'aimant est réalisé par un élastomère fortement chargé de particules magnétiques, ce qui justifie une couverture de protection. Les champs magnétiques générés à proximité du capteur ont donc une intensité magnétique relativement faible, d'autant plus que la protection réalisée par un élément métallique serti a une épaisseur d'un même ordre de grandeur que l'aimant.

On connaît aussi du document US-A-5 713 577, un anneau d'étanchéité comportant une zone codeuse polarisée qui est protégée par un élastomère l'entourant. Néanmoins, le signal magnétique généré est d'autant plus faible que la pâte chargée de particules magnétiques se présente sous forme d'un film.

La présente invention a pour but de pallier ces inconvénients en proposant un codeur de déplacement adapté pour générer un champ magnétique intense tout en étant utilisable dans des applications où règnent des contraintes mécaniques sévères, telles que des vibrations, et éventuellement dans lesquelles l'environnement peut être agressif chimiquement.

A cet effet, la présente invention a pour objet un codeur de déplacement pour arbre mobile, comprenant un manchon destiné à être calé sur l'arbre et une zone codeuse présentant au moins un repère magnétique polarisé, ladite zone codeuse comprenant au moins un aimant disposé contre le manchon et recouvert, caractérisé en ce qu'une couche en élastomère est surmoulée et adhérisée sur l'aimant et au moins sur une partie du manchon, ledit aimant étant un aimant permanent.

La couche en élastomère ainsi réalisée permet à la fois d'assurer une liaison mécanique robuste, et notamment vis-à-vis des vibrations et des dilatations thermiques, entre l'aimant et le manchon, que ce dernier soit en matière plastique ou métallique, grâce à la liaison chimique créée entre ces pièces par l'adhérisation. De plus, le surmoulage crée une couche qui isole l'aimant permanent de l'environnement extérieur.

Le ou les aimants permanents de la zone codeuse forment des repères magnétiques présentant une intensité élevée, qui sont plus facilement détectés par un capteur de champ magnétique. Les essais montrent que l'intensité magnétique des repères peut atteindre des valeurs deux fois plus importantes qu'avec de l'élastoferrite pour des codeurs comparables par ailleurs.

Le fait que le ou les aimants permanents soient protégés par une couche en élastomère autorise l'utilisation d'aimants standard qui ne présentent pas des caractéristiques particulièrement élevées de résistance à l'oxydation chimique, comme par exemple des aimants à base de ferrite, ce qui permet de limiter le coût du codeur.

Dans des modes de réalisation préférés de l'invention, on a recours, en outre à l'une et/ou à l'autre des dispositions suivantes :
- l'aimant permanent présente une face arrière disposée au moins en partie contre le manchon, une face avant opposée à la face arrière et des faces latérales reliant lesdites faces arrière et avant, la couche d'élastomère couvrant les faces latérales présentant une épaisseur au moins cinq fois supérieure à l'épaisseur de la couche d'élastomère recouvrant la face avant, ce qui permet de réaliser un bon compromis entre la protection de l'aimant, l'encombrement du codeur et sa tenue mécanique ;
- le manchon présente une portion d'appui contre laquelle repose l'aimant, ledit aimant couvrant la majeure partie de la largeur de la portion d'appui.
- l'aimant permanent est en particules magnétiques frittées, et de préférence de type samarium-cobalt ;
- l'aimant permanent est un plasto-aimant, et de préférence un plasto-aimant de type samarium-cobalt qui a l'avantage de conserver un champ magnétique important quand la température s'élève ;
- une lèvre annulaire venue de matière avec la couche d'élastomère est destinée à venir en contact avec un carter fixe entourant l'arbre ;
- le manchon présente une collerette annulaire s'étendant radialement, contre laquelle est disposé l'aimant permanent qui présente la forme d'un anneau plat ;
- le manchon présente une paroi cylindrique s'étendant parallèlement à son axe longitudinal, entourée par l'aimant permanent qui présente une forme tubulaire.
- la zone codeuse est formées d'une pluralité d'aimants permanents.

Par ailleurs, l'invention a également pour objet un dispositif comprenant un arbre mobile et un codeur de déplacement qui comprend un manchon calé sur l'arbre et une zone codeuse présentant au moins un repère magnétique polarisé et adaptée pour coder un déplacement dudit arbre, caractérisé en ce que la zone codeuse est formée d'au moins un aimant permanent disposé contre le manchon, et en ce qu'une couche en élastomère est surmoulée et adhérisée sur l'aimant et au moins sur une partie du manchon.

Ce dispositif peut comprendre en outre un carter rempli de liquide, ou de graisse, dans lequel pénètre l'arbre rotatif, et une lèvre annulaire, venue de matière avec la couche d'élastomère, qui est en contact glissant avec le carter et assure l'étanchéité entre ledit arbre et ledit carter.

On notera qu'il peut s'agir d'un dispositif comprenant un arbre rotatif ou un arbre coulissant selon la direction longitudinale de celui-ci, le codeur de déplacement présentant une zone codeuse de forme adaptée pour coder respectivement un déplacement angulaire ou un déplacement linéaire.

Par ailleurs, l'invention a pour objet un procédé de fabrication d'un codeur de déplacement comprenant un manchon en matière magnétique, au moins un aimant permanent adapté pour former une zone codeuse et une couche en élastomère, caractérisé en ce qu'il comprend les étapes de :
- traitement de surface du manchon par un traitement approprié comprenant le dépôt d'une couche d'adhérisation ;
- traitement de surface de l'aimant permanent par un traitement approprié comprenant le dépôt d'une couche d'adhérisation ; puis
- positionnement dans un moule dudit manchon et dudit au moins un aimant permanent ;
- surmoulage de la couche d'élastomère sur l'aimant et au moins une partie du manchon ; et
- vulcanisation de la couche d'élastomère.

Ce procédé peut également comprendre une opération de formation de repères polarisés par application d'un champ magnétique à l'aimant permanent, après l'étape de surmoulage.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe longitudinale simplifiée d'un arbre muni d'un codeur selon un premier mode de réalisation de l'invention ;
- la figure 2 est une vue en coupe analogue à la figure 1 d'un deuxième mode de réalisation ;
- la figure 3 est une vue en coupe analogue à la figure 1 d'un troisième mode de réalisation.

Sur les différentes figures on a conservé les mêmes références pour désigner des éléments identiques ou similaires.

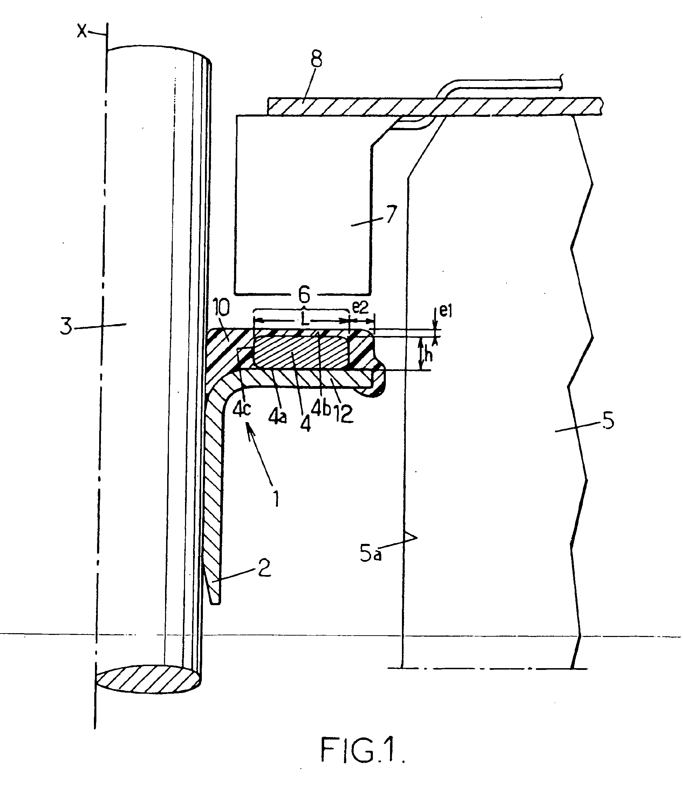

Comme on peut le voir sur la figure 1, le codeur angulaire 1 comprend un manchon 2 calé en rotation sur un arbre 3 rotatif à travers l'ouverture d'un carter fixe 5. Des repères magnétiques polarisés sont prévus dans une zone 6, dite zone codeuse, du codeur.

Le carter fixe 5 entourant le codeur angulaire 1 sert de base fixe pour un capteur 7 solidarisé au carter par l'intermédiaire d'une platine 8.

L'arbre rotatif 3 peut être constitué par tout arbre de machine tournante, comme par exemple un arbre de transmission ou un arbre de roue. On notera, d'une part, que le codeur angulaire 1 n'est pas nécessairement placé sur une portion de l'arbre entouré par un carter fixe, mais peut être placé à distance de tout carter ou pallier du moment qu'un capteur peut être maintenu à proximité de la zone codeuse 6. D'autre part, il pourrait s'agir d'un arbre effectuant un mouvement de translation selon son axe longitudinal X.

Le manchon 2 est métallique et est monté sur l'arbre rotatif 3 par emmanchement à force. Ce montage particulièrement simple permet d'immobiliser le manchon 2 en rotation et en translation par rapport à l'arbre 3. Mais on peut utiliser tout autre montage qui assure une immobilisation en rotation du manchon par rapport à l'arbre. Il est également envisageable d'utiliser un manchon en matière plastique ou en élastomère thermoplastique.

La zone codeuse 6 présente une forme, ici annulaire plane, et un nombre de repères polarisés adaptés pour que son déplacement avec l'arbre 3 permette de déterminer, par exemple, la position angulaire, la vitesse de rotation ou encore le sens de rotation de l'arbre.

Les repères polarisés de la zone codeuse 6 sont formés par une succession de secteurs angulaires polarisés alternativement nord-sud, avec éventuellement un secteur non polarisé ou une zone polarisée qui est plus étendue ou plus réduite que les autres, afin de déterminer une position angulaire absolue de l'arbre. La zone codeuse 6 forme donc une piste circulaire dans ce mode de réalisation. Toutefois, si le codeur angulaire est utilisé uniquement pour détecter une rotation ou un sens de rotation de l'arbre, la présence de repères polarisés sur l'ensemble du pourtour du manchon 2 n'est pas nécessaire.

Le capteur 7 doit être adapté pour détecter une variation du champ magnétique et pour cela on peut utiliser notamment un capteur à effet hall ou équivalent. Le capteur 7 est positionné de manière statique en regard de la zone codeuse circulaire 6 formée par les repères polarisés, afin de détecter les variations du champ magnétique.

La zone codeuse comprend un aimant permanent 4 qui génère un champ magnétique bipolaire ou multipolaire, de manière à former un ou plusieurs repères polarisés détectés par le capteur 7. Il peut s'agir de tous types d'aimants connus qui se présentent sous la forme d'une pièce rigide réalisée avant la fabrication du codeur de déplacement 1. Les aimants permanents génèrent des champs plus intenses que ceux que l'on peut obtenir avec un matériau de type élastoferrite, de sorte que l'entrefer, c'est-à-dire la distance séparant la zone codeuse du capteur 7, peut être plus important, ou que l'on peut utiliser un capteur magnétique moins sensible.

Le type de l'aimant permanent 4 est choisi notamment en fonction de son coût et de l'intensité recherchée pour les repères ,polarisés. A titre d'exemple, l'aimant permanent est de type fritté, c'est-à-dire formé de particules magnétiques agglomérées ensemble par frittage, appelées aussi aimants céramique. Ce type d'aimant, comme par exemple les aimants comprenant du ferrite de strontium ou du samarium-cobalt, génère des champs magnétiques supérieurs aux élastoferrites, de l'ordre de deux fois supérieurs dans le cas du samarium-cobalt. Les aimants frittés à base de samarium-cobalt présentent une faible perte du champ magnétique lorsque la température s'élève, et sont donc avantageux pour réaliser des codeurs devant fonctionner sur un large plage de température, par exemple de - 50 °C à + 250 °C.

Il est également possible d'utiliser un plasto-aimant qui se présente sous forme d'une pièce relativement rigide dans laquelle les particules magnétiques, comme par exemple des terres rares, des ferrites de strontium ou du samarium-cobalt, sont liées par une matière plastique ou un élastomère thermoplastique. Certains plasto-aimants, et notamment ceux du type samarium-cobalt, présentent l'avantage de générer des champs magnétiques intenses et stables dans le temps. De plus, ils peuvent être réalisés dans des formes variées.

L'aimant 4 présente une face arrière 4a disposée contre le manchon 2, une face avant 4b opposée à la face arrière 4a et des faces latérales 4c reliant les faces avant et arrière. On notera que la face arrière 4a n'est pas forcément entièrement en contact avec le manchon 2. En effet, le manchon peut comporter des reliefs pour positionner l'aimant, de sorte qu'il peut subsister des espaces entre le manchon 2 et l'aimant 4.

Une couche 10 de polymère est surmoulée sur l'aimant, et plus précisément sur l'ensemble de ses faces apparentes (4b, 4c) lorsqu'il est disposé contre le manchon 2. La couche de polymère 10 est également surmoulée sur une partie du manchon qui est adjacente à l'aimant.

Le polymère utilisé pour réaliser la couche 10 est un élastomère. Ce type de polymère, comprenant les caoutchoucs naturels ou synthétiques, permet d'assurer la fixation mécanique de l'aimant permanent 4 sur le manchon 2 grâce à ses capacités d'adhérisation sur les matériaux métalliques et plastiques. De plus, ils possèdent une bonne résistance aux contraintes mécaniques, notamment aux vibrations et aux dilatations thermiques, ainsi qu'une résistance satisfaisante à la plupart des produits chimiques que l'on peut rencontrer dans l'environnement d'un codeur de déplacement. On notera toutefois que la surface extérieure de la couche d'élastomère 10 peut être recouverte par une mince couche de protection supplémentaire réalisée dans un autre polymère, comme le PTFE qui présente une résistance particulière à certains produits chimiques.

La couche d'élastomère couvrant la face avant 4b de l'aimant présente une épaisseur e1 mesurée perpendiculairement à la face avant, tandis que les faces latérales 4c sont recouvertes par une couche d'élastomère présentant une épaisseur e2. L'épaisseur e2 de la couche d'élastomère couvrant les faces latérales 4c qui s'étendent jusqu'au manchon 2, est au moins cinq fois supérieure à l'épaisseur e1 sur la face avant 4b, afin d'obtenir un bon compromis entre la tenue mécanique de l'aimant 4 sur le manchon 2 obtenue par l'adhérisation, l'encombrement du codeur de déplacement selon l'axe longitudinal X de l'arbre et la protection de l'aimant par rapport à l'environnement du codeur. Selon les applications auxquelles est destiné le codeur de déplacement, ce rapport entre les épaisseurs e1 et e2 peut être nettement supérieur, mais dans la plupart des cas, un rapport sensiblement égal à cinq est satisfaisant. On notera que pour l'épaisseur e2, la valeur à prendre en considération est celle de l'épaisseur moyenne minimale de la couche présente de long d'une face latérale, étant donné que sur certaines faces latérales 4c l'épaisseur e2 peut être beaucoup plus importante afin que la couche d'élastomère 10 remplisse une autre fonction que la tenue de l'aimant 4. L'épaisseur e1 peut être limitée à quelques centièmes de millimètre, tout en conservant sa fonction de protection. On notera que les éventuels espaces, qui subsistent entre la face arrière 4a de l'aimant et le manchon 2, peuvent être plus ou moins partiellement comblés lors du surmoulage de la couche d'élastomère 10.

Pour l'aimant permanent 4, on choisit un aimant se présentant sous forme d'une pièce mince, c'est-à-dire dont l'épaisseur mesurée entre la face arrière 4a et la face avant 4b, h sur la figure 1, est sensiblement inférieure à la largeur L de la zone codeuse 6. Une épaisseur h de l'aimant 4 comprise entre un sixième et un tiers de la largeur L de la zone codeuse permet d'obtenir un bon compromis entre l'intensité du champ magnétique généré et l'encombrement selon l'axe X du codeur de déplacement.

La zone codeuse 6 présente une forme annulaire entourant toute la périphérie de l'arbre, notamment dans le but de coder une position angulaire absolue de l'arbre ou de déterminer de manière quasi-instantanée la vitesse ou le sens de rotation de l'arbre. Pour former une zone codeuse annulaire, on dispose un ou plusieurs aimants permanents contre le manchon 2, de manière à décrire un cercle concentrique à l'arbre.

Par exemple, dans le mode de réalisation représenté à la figure 1, le manchon 2 présente une collerette annulaire 12 s'étendant radialement par rapport à l'axe longitudinal X. La zone codeuse circulaire 6 est alors formée d'un d'aimant annulaire 4 magnétisé de manière multipolaire, avec éventuellement des singularités, et disposé contre la collerette 12. L'aimant permanent 4 présente alors la forme d'un anneau plat disposé concentriquement à l'axe longitudinal X, qui permet de former avec précision l'ensemble de la zone codeuse. Toutefois, il est parfaitement envisageable de réaliser la zone codeuse à l'aide de plusieurs aimants permanents présentant la forme d'une portion angulaire d'un anneau plat, les faces d'extrémité circonférentielles de deux aimants consécutifs étant disposées l'une contre l'autre, de manière à former une zone codeuse continue. Il est également envisageable de placer un ou quelques aimants se présentant par exemple sous forme de pastilles pour former un repère unique ou quelques repères espacés.

On notera que l'aimant 4 présente une largeur L qui permet de recouvrir la majeure partie, ici environ 75 %, de la portion du manchon 2 formée par la collerette 12.

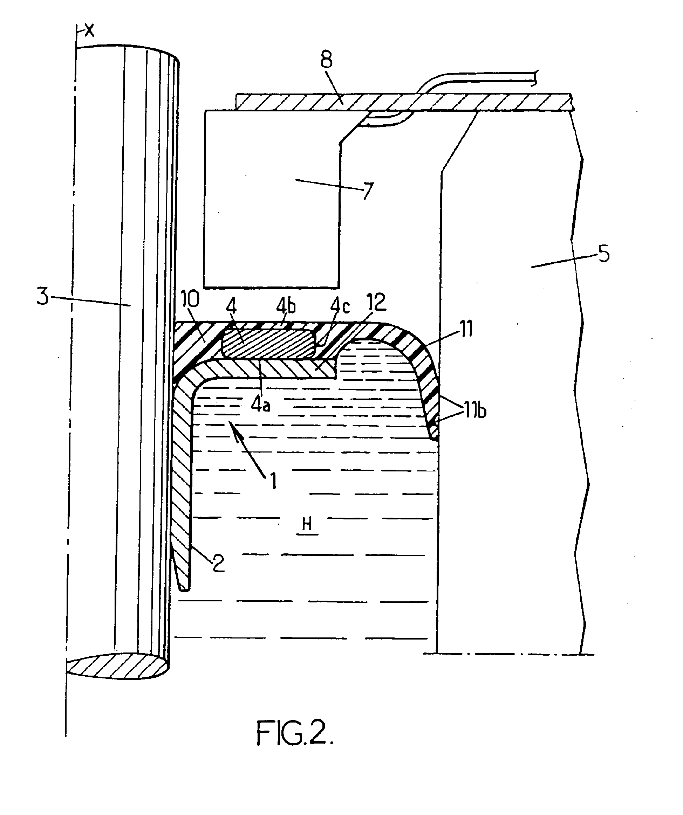

Dans le mode de réalisation représenté à la figure 2, la couche d'élastomère 10 s'étend radialement par rapport à l'arbre 3 au-delà de la collerette 12 jusqu'à venir en contact avec la paroi 5a du carter fixe. Ainsi, la couche 10 forme une lèvre d'étanchéité 11 en contact rotatif glissant avec le carter 5. La couche en élastomère 10 et la lèvre 11 venue de matière avec celle-ci, sont réalisées simultanément au cours du processus de fabrication.

Le codeur angulaire 1 ainsi réalisé remplit une fonction de joint dynamique d'étanchéité en plus de sa fonction de codage. Ce deuxième mode de réalisation du codeur angulaire est donc tout particulièrement destiné à un dispositif tel qu'un moteur ou une boîte de vitesse, dans lequel le carter 5 rempli d'un liquide H, éventuellement sous pression, est traversé par un arbre 3, pour assurer l'étanchéité entre l'arbre et le carter.

Dans le mode de réalisation représenté à la figure 2, la base de la lèvre 11 s'étend sensiblement dans le prolongement de la couche 10 et est recourbée dans la configuration représentée lors de la mise en place du codeur angulaire sur l'arbre 3. L'extrémité 11a de la lèvre peut comporter sur sa surface en contact avec le carter fixe 5, des gorges 11b qui améliorent l'étanchéité dynamique entre la lèvre et la surface radiale 5a du carter en regard de l'arbre 3.

Il est bien entendu possible que la lèvre 11 présente une configuration géométrique plus complexe pour s'adapter à la configuration de la surface avec laquelle elle doit venir en contact ou pour augmenter ses propriétés d'étanchéité.

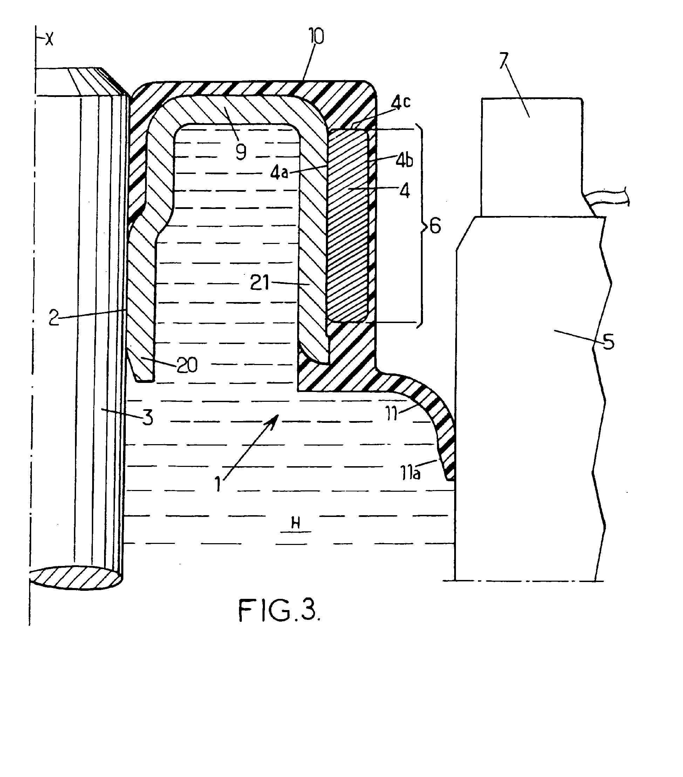

A la figure 3 est représenté un troisième mode de réalisation analogue au deuxième mode, c'est-à-dire comportant une lèvre d'étanchéité 11 intégralement formée avec la couche de protection 10.

Dans ce troisième mode, la zone codeuse 6 s'étend longitudinalement et est orientée radialement vers le capteur 7. La zone codeuse 6 est formée par un aimant tubulaire cylindrique 4 qui entoure de manière rapprochée une paroi cylindrique du manchon 2 coaxiale à l'axe longitudinal X, de sorte que la zone codeuse est annulaire et concentrique à l'arbre 3. L'utilisation d'un aimant annulaire en une pièce permet d'obtenir une grande précision de positionnement des repères polarisés, mais l'utilisation de plusieurs aimants est également possible.

La couche de protection 10 couvre l'aimant 4, mais aussi toute la surface extérieure du manchon 2 et protège ainsi l'ensemble du codeur contre les agressions mécaniques ou chimiques provenant de l'extérieur du carter 5.

Le manchon 2 présente une section en U, une première branche 20 du U venant enserrer l'arbre 3, une deuxième branche 21 supportant l'aimant 4 et la base 9 du U permettant de combler une partie du jeu entre l'arbre 3 et le carter 5.

Le manchon 2 du codeur est réalisé selon un procédé comprenant les étapes suivantes.

On effectue un traitement de surface du manchon 2 afin de permettre l'adhérisation de la couche d'élastomère 10 lors de la vulcanisation de celle-ci. Ce traitement peut varier selon la nature du manchon 10, et notamment selon s'il s'agit d'un manchon métallique ou en matière plastique. Par exemple, le traitement de surface peut comprendre tout d'abord une opération de dégraissage suivie d'une opération de phosphatation.

L'étape de traitement du manchon 2 comprend le dépôt d'une couche d'adhérisation qui se présente sous la forme d'un très fin film d'un précurseur chimique à l'adhérisation. Par exemple, la couche d'adhérisation peut être constituée par une résine phénolique.

Le procédé comprend également une étape de traitement de surface de l'aimant permanent 4, qui peut varier sensiblement selon qu'il s'agit d'un aimant de particules magnétiques frittées ou d'un plasto-aimant. Mais le traitement de l'aimant permanent comprend également le dépôt d'une couche d'adhérisation. On notera que le traitement de surface du manchon 2 et de l'aimant permanent 4 peuvent être sensiblement différents du fait de la nature de leur matériau et de leur état de surface initial.

Lorsque le manchon 2 et l'aimant permanent 4 sont convenablement traités et recouverts d'une couche d'adhérisation, on les place dans un moule. La position de l'aimant permanent 4 par rapport au manchon 2 est ajustée, par exemple à l'aide de reliefs de faible hauteur formés sur le manchon 2.

La couche d'élastomère 10 est ensuite surmoulée sur l'aimant permanent 4 et au moins une partie du manchon 2, soit par injection d'élastomère, soit par déformation à chaud d'une préforme en exerçant une pression avec une partie du moule.

Le moule est ensuite maintenu à une température adaptée pendant un temps déterminé afin d'obtenir la vulcanisation de l'élastomère et ainsi son adhérisation au manchon 2 et à l'aimant permanent 4.

L'adhérisation de la couche d'élastomère 10 obtenue par la formation de liaison chimiques et différente d'un simple collage, réalise un codeur 1 se présentant sous forme d'une pièce unitaire indémontable, qui résiste particulièrement bien aux vibrations et aux dilatations thermiques.

L'utilisation d'un seul aimant permet de former avec précision l'ensemble des repères polarisés de la zone codeuse 6, notamment grâce à un formation des repères polarisés par application d'une aimantation permanente à l'aimant 4 après son adhérisation au manchon 2.

Bien entendu, les modes de réalisation décrits précédemment ne sont nullement limitatifs. Il est notamment possible de réaliser un codeur angulaire dont la zone codeuse 6 ne s'étend pas selon une direction radiale ou longitudinale, mais selon une direction inclinée par rapport à l'arbre.

Par ailleurs, il apparaîtra à l'homme du métier que l'invention peut être appliquée à un codeur linéaire, solidaire d'un arbre coulissant, dont la zone codeuse comporte un ou plusieurs aimants. Dans ce type d'application, la zone codeuse présente un, ou plusieurs, repères polarisés répartis selon la direction de coulissement de l'arbre, afin d'être adapté pour coder un déplacement linéaire.

## Revendications

1. Codeur de déplacement pour arbre mobile, comprenant un manchon (2) destiné à être calé sur l'arbre (3) et une zone codeuse (6) présentant au moins un repère magnétique polarisé, ladite zone codeuse (6) comprenant au moins un aimant (4) disposé contre le manchon et recouvert, **caractérisé en ce qu'**une couche en élastomère (10) est surmoulée et adhérisée sur l'aimant (4) et au moins sur une partie du manchon (2), ledit aimant (4) étant un aimant permanent.

2. Codeur de déplacement selon la revendication 1, dans lequel l'aimant permanent (4) présente une face arrière (4a) disposée au moins en partie contre le manchon (2), une face avant (4b) opposée à la face arrière et des faces latérales (4c) reliant lesdites faces arrière et avant, la couche d'élastomère (10) couvrant les faces latérales (4c) présentant une épaisseur (e2) au moins cinq fois supérieure à l'épaisseur (e1) de la couche d'élastomère recouvrant la face avant (4a).

3. Codeur de déplacement selon la revendication 1 ou 2, dans lequel le manchon (2) présente une portion d'appui (12;21) contre laquelle repose l'aimant (4), ledit aimant couvrant la majeure partie de la largeur de la portion d'appui.

4. Codeur de déplacement selon l'une quelconque des revendications 1 à 3, dans lequel l'aimant permanent (4) est en particules magnétiques frittées, et de préférence de type samarium-cobalt.

5. Codeur de déplacement selon l'une quelconque des revendications 1 à 3, dans lequel l'aimant permanent (4) est un plasto-aimant, et de préférence un plasto-aimant de type samarium-cobalt.

6. Codeur de déplacement selon l'une quelconque des revendications 1 à 5, dans lequel une lèvre annulaire (11), venue de matière avec la couche d'élastomère (10), est destinée à venir en contact avec un carter (5) fixe entourant l'arbre (3).

7. Codeur de déplacement selon l'une quelconque des revendications 1 à 6, dans lequel le manchon (2) présente une collerette annulaire (12) s'étendant radialement, contre laquelle est disposé l'aimant permanent (4) qui présente la forme d'un anneau plat.

8. Codeur de déplacement selon l'une quelconque des revendications 1 à 6, dans lequel le manchon (2) présente une paroi cylindrique (21) s'étendant parallèlement à son axe longitudinal (X), entourée par l'aimant permanent (4) qui présente une forme tubulaire.

9. Codeur de déplacement l'une quelconque des revendications 1 à 6, dans lequel la zone codeuse (6) est formées d'une pluralité d'aimants permanents.

10. Dispositif comprenant un arbre mobile (3) et un codeur de déplacement qui comprend un manchon (2) calé sur l'arbre et une zone codeuse (6) présentant au moins un repère magnétique polarisé adapté pour coder un déplacement dudit arbre, ladite zone codeuse (6) comprenant au moins un aimant (4) disposé contre le manchon (2) et recouvert, **caractérisé en ce qu'**une couche en élastomère (10) est surmoulée et adhérisée sur l'aimant (4) et au moins sur une partie du manchon (2), ledit aimant (4) étant un aimant permanent.

11. Dispositif selon la revendication 10 comprenant en outre un carter (5) rempli de liquide H dans lequel pénètre l'arbre rotatif (3), et dans lequel une lèvre annulaire (11), venue de matière avec la couche d'élastomère (10), est en contact glissant avec le carter et assure l'étanchéité entre ledit arbre et ledit carter.

12. Procédé de fabrication d'un codeur de déplacement comprenant un manchon (2) en matière magnétique, au moins un aimant permanent (4) adapté pour former une zone codeuse (6) et une couche en élastomère (10), **caractérisé en ce qu'**il comprend les étapes de :
- traitement de surface du manchon (2) par un traitement approprié comprenant le dépôt d'une couche d'adhérisation ;
- traitement de surface de l'aimant permanent (4) par un traitement approprié comprenant le dépôt d'une couche d'adhérisation ; puis
- positionnement dans un moule dudit manchon (2) et dudit au moins un aimant permanent (4) ;
- surmoulage de la couche d'élastomère (10) sur l'aimant (4) et au moins une partie du manchon (2) ; et
- vulcanisation de la couche d'élastomère (10).

13. Procédé de fabrication selon la revendication 12, dans lequel une opération de formation de repères polarisés par application d'un champ magnétique à l'aimant permanent (4), est prévue après l'étape de surmoulage.

## Claims

1. Displacement encoder for a moving shaft, comprising a sleeve (2) intended to be clamped on the shaft (3) and an encoding zone (6) having at least one polarized magnetic mark, said encoding zone (6) comprising at least one permanent magnet (4) disposed against the sleeve covered, **characterized in that** a layer of elastomer (10) is overmolded and adherized on the magnet (4) and at least on a part of the sleeve (2), said magnet (4) being a permanent magnet.

2. Displacement encoder according to claim 1, wherein the permanent magnet (4) has a rear face (4a) disposed at least partially against the sleeve (2), a front face (4b) opposite to the rear face and side faces (4c) connecting said rear and front faces, the elastomer layer (10) covering the side faces (4c) having a thickness at least five times greater than the thickness of the elastomer layer covering the front face (4a).

3. Displacement encoder according to claim 1 or 2, wherein the sleeve (2) has a bearing portion (12;21) against which the magnet (4) bears, said magnet covering the major part of the width of the bearing portion.

4. Displacement encoder according to any one of claims 1 to 3, wherein the permanent magnet (4) is made of sintered magnetic particles, and preferably of the samarium-cobalt type.

5. Displacement encoder according to any one of claims 1 to 3, wherein the permanent magnet (4) is a plastomagnet and preferably a plastomagnet of the samarium-cobalt type.

6. Displacement encoder according to any one of claims 1 to 5, wherein an annular lip (11) formed in one piece with the material of the elastomer layer (10) is designed to come into contact with a fixed casing (5) surrounding the shaft (3).

7. Displacement encoder according to any one of claims 1 to 6, wherein the sleeve (2) has an annular collar (12) extending radially, against which is disposed the permanent magnet (4) which has the shape of a flat ring.

8. Displacement encoder according to any one of claims 1 to 6, wherein the sleeve (2) has a cylindrical wall (21) extending parallel with its longitudinal axis (X), surrounded by the permanent magnet (4) which has a tubular shape.

9. Displacement encoder according to any one of claims 1 to 6, wherein the encoding zone (6) is formed from a plurality of permanent magnets.

10. Device comprising a moving shaft (3) and a displacement encoder which comprises a sleeve (2) clamped onto the shaft and an encoding zone (6) having at least one polarized magnetic mark adapted to encode a displacement of the said shaft, said encoding zone (6) comprising at least one permanent magnet (4) disposed against the sleeve (2) and covered, **characterized in that** a layer of elastomer (10) is overmolded and adherized on the magnet (4) and at least on a part of the sleeve (2), said magnet (4) being a permanent magnet.

11. Device according to claim 10, furthermore comprising a casing (10) filled with liquid H in which the rotary shaft (3) penetrates, and in which an annular lip (11), made in one piece from the material of the elastomer layer (10), is in sliding contact with the casing and ensures the fluid-tightness between said shaft and said casing.

12. Method of manufacturing a displacement encoder comprising a sleeve (2) made of magnetic material, at least one permanent magnet (4) adapted to form an encoding zone (6) and an elastomer layer (10), said method comprising the steps of:
- surface treatment of the sleeve (2) using an appropriate treatment comprising the deposit of an adherization layer;
- surface treatment of the permanent magnet (4) using an appropriate treatment comprising the deposit of an adherization layer; and then
- positioning of said sleeve (2) and of said at least one permanent magnet (4) in a mould;
- overmolding of the elastomer layer (10) onto the magnet (4) and at least a part of the sleeve (2); and
- vulcanization of the elastomer layer (10).

13. Manufacturing method according to claim 12, wherein a step of forming polarized marks by application of a magnetic field to the permanent magnet (4) is provided after the step of overmolding.

## Patentansprüche

1. Weggeber für bewegliche Wellen, umfassend eine Muffe (2), die dazu bestimmt ist, auf der Welle (3) festgesetzt zu werden, und eine Codierzone (6), welche mindestens eine polarisierte magnetische Markierung aufweist, wobei die Codierzone (6) mindestens einen Magneten (4) umfasst, welcher an der Muffe gelegen und bedeckt ist, **dadurch gekennzeichnet, dass** eine Elastomerschicht (10) auf den Magneten (4) und mindestens auf einen Teil der Muffe (2) geformt und haftend gemacht ist, wobei der Magnet (4) ein Dauermagnet ist.

2. Weggeber nach Anspruch 1, bei dem der Dauermagnet (4) eine Rückseite (4a), die zumindest teilweise an der Muffe (2) gelegen ist, eine der Rückseite gegenüber liegende Vorderseite (4b), und die Rückseite und die Vorderseite verbindende seitliche Flächen (4c) aufweist, wobei die die seitlichen Flächen (4c) bedeckende Elastomerschicht (10) eine Dicke (e2) aufweist, die mindestens fünf Mal größer als die Dicke (e1) der die Vorderseite bedeckenden Elastomerschicht (4a) ist.

3. Weggeber nach Anspruch 1 oder 2, bei dem die Muffe (2) einen Stützabschnitt (12; 21) aufweist, auf dem der Magnet (4) ruht, wobei der genannte Magnet den größten Teil der Breite des Stützabschnitts bedeckt.

4. Weggeber nach einem der Ansprüche 1 bis 3, bei dem der Dauermagnet (4) aus gesinterten Magnetpartikeln, vorzugsweise vom Typ Samarium-Cobalt, besteht.

5. Weggeber nach einem der Ansprüche 1 bis 3, bei dem der Dauermagnet (4) ein Plastikmagnet, vorzugsweise ein Plastikmagnet vom Typ Samarium-Cobalt, ist.

6. Weggeber nach einem der Ansprüche 1 bis 5, bei dem eine mit der Elastomerschicht (10) einstückige Ringlippe (11) dazu bestimmt ist, eine feste, die Welle (3) umgebende Wanne (5) zu berühren.

7. Weggeber nach einem der Ansprüche 1 bis 6, bei dem die Muffe (2) einen ringförmigen, sich radial erstreckenden Kragen (12) aufweist, gegen den der Dauermagnet (4), der die Form eines flachen Rings aufweist, angeordnet ist.

8. Weggeber nach einem der Ansprüche 1 bis 6, bei dem der Stutzen (2) eine zylindrische, sich parallel zu ihrer Längsachse (X) erstreckende Wand (21) aufweist, die vom Dauermagneten (4), der eine röhrenartige Form aufweist, umgeben wird.

9. Weggeber nach einem der Ansprüche 1 bis 6, bei dem die Codierzone (6) aus einer Mehrzahl von Dauermagneten gebildet wird.

10. Vorrichtung umfassend eine bewegliche Welle (3) und einen Weggeber, der eine auf der Welle festgesetzte Muffe (2) und eine Codierzone (6) umfasst, welche mindestens eine polarisierte magnetische Markierung aufweist, die angepasst ist, um eine Bewegung der Welle zu codieren, wobei die Codierzone (6) mindestens einen Magneten (4) umfasst, welcher an der Muffe (2) gelegen und bedeckt ist, **dadurch gekennzeichnet, dass** eine Elastomerschicht (2) auf den Magneten (4) und mindestens auf einen Teil der Muffe (2) geformt und haftend gemacht ist, wobei der Magnet (4) ein Dauermagnet ist.

11. Vorrichtung nach Anspruch 10, umfassend darüber hinaus eine mit Flüssigkeit H gefüllte Wanne (5), in die die drehbare Welle (3) eindringt und in der eine mit der Elastomerschicht (10) einstückige Ringlippe (11) sich in gleitendem Kontakt mit der Wanne befindet und die Dichtigkeit zwischen der genannten Welle und der genannten Wanne sicherstellt.

12. Verfahren zum Herstellen eines Weggebers, umfassend eine Muffe (2) aus magnetischem Material, mindestens einen Dauermagneten (4), der angepasst ist, um eine Codierzone (6) zu bilden, und eine Elastomerschicht (10), **gekennzeichnet durch** die folgenden Schritte:
- Behandeln der Oberfläche der Muffe (2) **durch** eine geeignete, das Aufbringen einer Haftschicht umfassende Behandlung;
- Behandeln der Oberfläche des Dauermagneten (4) durch eine geeignete, das Aufbringen einer Haftschicht umfassende Behandlung; anschließend
- Positionieren der Muffe (2) und des mindestens einen Dauermagneten (4) in einer Form;
- Formen der Elastomerschicht (10) auf dem Magneten (4) und mindestens einem Teil der Muffe (2); und
- Vulkanisieren der Elastomerschicht (10).

13. Herstellungsverfahren nach Anspruch 12, bei dem nach dem Schritt des Formens ein Vorgang zum Bilden polarisierter Markierungen durch Anlegen eines Magnetfelds an den Dauermagneten (4) vorgesehen ist.
